# EUROPEAN PATENT APPLICATION

(11) **EP 4 371 760 A1**
(43) Date of publication of application: **22.05.2024**
(21) Application number: 23206372.7
(22) Date of filing: 27.10.2023
(51) Int. Cl.: B32B 5/18, B32B 7/12

(54) **THERMAL INSULATING STRUCTURES**

(30) Priority: 16.11.2022 GB 202217122
(71) Applicant: Advanced Innergy Ltd, Gloucester, GL2 4PA (GB)
(72) Inventor: PALMAN, Riccardo, Gloucester, GL2 4PA (GB)
(74) Representative: Swindell & Pearson Limited

(57) **Abstract**

A thermal insulating structure for a substrate. The structure comprises a tie coat bonded to the substrate and a foam insulating layer bonded to the tie coat. The foam insulating layer is the reaction product of a first material comprising a bio-based resin and a second material comprising a hardener.

## Description

### FIELD OF THE INVENTION

Embodiments of the present invention relate to pack in place thermal insulating structures for substrates, and particularly but not exclusively to thermal insulating structures for subsea use.

### BACKGROUND TO THE INVENTION

The application of thermal insulation, for example to subsea oil and gas equipment, is essential both for the technical feasibility and for the economic viability of a project, particularly in deep water and ultra deep water developments.

Phenolic resins are synthetic resins made from the polymerization of phenol (C6H5OH) and formaldehyde (CH2C=O). Repeating units of -[(C6H3OH)-CH2]- with methylene (-CH2-) connections linking carbon sites to the phenolic hydroxide (-OH) group make up the polymer. Accordingly, phenolic resins are formaldehyde-phenol copolymers.

Thermal insulating structures based on phenolic resins are known. However, there are significant environmental and health and safety concerns with the use of phenolic resins. There is, therefore, a need to address this shortcoming.

### BRIEF DESCRIPTION OF VARIOUS EMBODIMENTS OF THE INVENTION

According to a first aspect of the present disclosure, there is provided a thermal insulating structure for a substrate, the thermal insulating structure comprising:
a tie coat bonded to the substrate; and
a foam insulating layer bonded to the tie coat, wherein the foam insulating layer is the reaction product of a first material comprising a bio-based resin and a second material comprising a hardener.

The foam insulating layer first material may comprise from 35 to 80 %(w/w) of the bio-based resin, or preferably may comprise from 45 to 70 %(w/w) of the bio-based resin, or most preferably may comprise from 50 to 60 %(w/w) of the bio-based resin.

The foam insulating layer second material may comprise up to 100 %(w/w) of the hardener, or may comprise 100 %(w/w) of the hardener.

The foam insulating layer first material may comprise an amino functional silane coupling agent. The foam insulating layer first material may comprise up to 2.5 %(w/w) of the amino functional silane coupling agent, or preferably may comprise from 0.5 to 2.5 %(w/w) of the amino functional silane coupling agent, or most preferably may comprise from 1 to 2 %(w/w) of the amino functional silane coupling agent.

The foam insulating layer first material may comprise a reinforcing agent. The reinforcing agent may be glass strands. The foam insulating layer first material may comprise up to 5 %(w/w) glass strands, or preferably may comprise from 0.5 to 3 %(w/w) glass strands, or most preferably may comprise from 1 to 2 %(w/w) glass strands. The glass strands may be from 3 to 12 mm long, or preferably may be from 5 to 7 mm long.

The foam insulating layer first material may comprise hollow microspheres. The foam insulating layer first material may comprise from 15 to 30 %(w/w) hollow microspheres, or preferably may comprise from 18 to 30 %(w/w) hollow microspheres, or most preferably may comprise from 21 to 28 %(w/w) hollow microspheres. The hollow microspheres may comprise hollow glass microspheres.

The foam insulating layer first material may comprise a toughener. The foam insulating layer first material may comprise up to 20 %(w/w) of a toughener, or preferably may comprise from 10 to 20 %(w/w) of the toughener, or most preferably may comprise from 14 to 18 %(w/w) of the toughener. The toughener may be a nitrile butadiene rubber, which may be a micronised nitrile butadiene rubber.

The foam insulating layer second material may comprise a cure accelerator. The cure accelerator may be para toluene sulphonic acid. The foam insulating layer second material may comprise up to 10 %(w/w) para toluene sulphonic acid as a cure accelerator, or preferably may comprise up to 3 %(w/w) para toluene sulphonic acid as a cure accelerator. Possibly, the foam insulating layer second material does not comprise a cure accelerator.

The ratio of foam insulating layer first material to second material may be from 3:1 to 10:1, or preferably may be from 4:1 to 9:1, or most preferably may be from 6:1 to 8:1.

The tie coat may be the reaction product of a first material comprising a bio-based resin and a second material comprising a hardener.

The tie coat first material may comprise from 40 to 80 %(w/w) of the bio-based resin, or preferably may comprise from 50 to 75 %(w/w) of the bio-based resin, or most preferably may comprise from 65 to 70 %(w/w) of the bio-based resin.

The tie coat second material may comprise from 90 to 98 %(w/w) of the hardener.

The tie coat second material may comprise up to 1 %(w/w) para toluene sulphonic acid as a cure accelerator.

The tie coat first material may comprise an amino functional silane coupling agent. The tie coat first material may comprise up to 2.5 %(w/w) of the amino functional silane coupling agent, or preferably may comprise from 0.5 to 2.5 %(w/w) of the amino functional silane coupling agent, or most preferably may comprise from 1 to 2 %(w/w) of the amino functional silane coupling agent.

The tie coat first material may comprise a plasticiser. The tie coat first material may comprise up to 2 %(w/w) plasticiser. The plasticiser may comprise ethanediol.

The tie coat first material may comprise an anti-cissing agent. The tie coat first material may comprise up to 2 %(w/w) anti-cissing agent.

The tie coat first material may comprise fumed silica. The tie coat first material may comprise from 1 to 4 %(w/w) fumed silica.

The tie coat first material may comprise microspheres. The microspheres of the tie coat first material may be solid. The tie coat first material may comprise from 15 to 30 %(w/w) microspheres, or preferably may comprise from 23 to 28 %(w/w) microspheres. The microspheres may comprise glass microspheres and/or polymer microspheres.

The tie coat second material may comprise up to 10 %(w/w) water.

The ratio of tie coat first material to second material may be from 5:1 to 10:1.

The thermal insulating structure may comprise an outer protective layer bonded to the foam insulating layer. The outer protective layer may be the reaction product of a first material comprising a bio-based resin and a second material comprising a hardener.

The outer protective layer first material may comprise from 50 to 100 %(w/w) of the bio-based resin, or preferably may comprise from 93 to 99 %(w/w) of the bio-based resin.

The outer protective layer second material may comprise up to 100 %(w/w) of the hardener, or may comprise 100 %(w/w) of the hardener.

The outer protective layer first material may comprise an amino functional silane coupling agent. The outer protective layer first material may comprise up to 2.5 %(w/w) of the amino functional silane coupling agent, or preferably may comprise from 0.5 to 2.5 %(w/w) of the amino functional silane coupling agent, or most preferably may comprise from 1 to 2 %(w/w) of the amino functional silane coupling agent.

The outer protective layer first material may comprise a plasticiser. The outer protective layer first material may comprise up to 1 %(w/w) plasticiser. The plasticiser may comprise ethanediol.

The outer protective layer first material may comprise fumed silica. The outer protective layer first material may comprise up to 4 %(w/w) fumed silica.

The ratio of outer protective layer first material to second material may be from 10:1 to 20:1.

Fibre reinforcement may be comprised in the outer protective layer. The fibres may be of glass, Kevlar or carbon.

The bio-based resin may be plant based. The bio-based resin may be derived from a plant or plants. The bio-based resin may be substantially derived from a plant or plants. The bio-based resin may be exclusively derived from a plant or plants. The bio-based resin may be a 100% derived from a plant or plants. The bio-based resin may be free from synthetic materials.

Possibly, the bio-based resin comprised in the foam insulating layer first material is a polyfurfuryl alcohol resin and the hardener comprised in the foam insulating layer second material is a partial phosphate ester.

Possibly, the bio-based resin comprised in the tie coat first material is a polyfurfuryl alcohol resin and the hardener comprised in the tie coat second material is a partial phosphate ester.

Possibly, the bio-based resin comprised in the outer protective layer first material is a polyfurfuryl alcohol resin and the hardener comprised in the outer protective layer second material is a partial phosphate ester.

Possibly, the bio-based resin comprised in the foam insulating layer first material is a lignin biopolymer resin and the hardener comprised in the foam insulating layer second material is an epoxy-based hardener.

Possibly, the bio-based resin comprised in the tie coat first material is a lignin biopolymer resin and the hardener comprised in the tie coat second material is an epoxy-based hardener.

Possibly, the bio-based resin comprised in the outer protective layer first material is a lignin biopolymer resin and the hardener comprised in the outer protective layer second material is an epoxy-based hardener.

The epoxy-based hardener may be 1,2,3-Propantriol, homopolymer, 2-oxiranylmethyl ether.

The thermal insulating structure may be useable subsea.

According to a second aspect of the present disclosure there is provided a method of applying a thermal insulating structure to a substrate, the method comprising:
applying a tie coat to the substrate; and
applying a foam insulating layer to the tie coat, wherein the foam insulating layer is the reaction product of a first material comprising a bio-based resin and a second material comprising a hardener.

The method may comprise applying an outer protective layer to the foam insulating layer.

According to a third aspect of the present disclosure there is provided a substrate having a thermal insulating structure thereon, wherein the thermal insulating structure comprises:
a tie coat bonded to the substrate; and
a foam insulating layer bonded to the tie coat, wherein the foam insulating layer is the reaction product of a first material comprising a bio-based resin and a second material comprising a hardener.

The thermal insulating structure may comprise an outer protective layer bonded to the foam insulating layer.

### DETAILED DESCRIPTION OF VARIOUS EMBODIMENTS OF THE INVENTION

Embodiments of the present disclosure will now be described by way of example only.

Thermal insulating structures according to examples of the disclosure comprise a tie coat, i.e., an inner tie coat, bonded to a substrate, a foam insulating layer bonded to the tie coat, and optionally an outer protective layer bonded to the foam insulating layer. The outer protective layer may be a laminate. The tie coat may be flexible. The tie coat is provided between the foam insulating layer and the substrate. The tie coat provides a transitional layer that bonds or improves the adhesion of the foam insulating layer and the substrate. Accordingly, the tie coat ties these adjacent layers together.

The foam insulating layer is the reaction product of a first material comprising a curable bio-based resin and a second material comprising a hardener.

A bio-based resin is a resin material intentionally made from substances derived from living (or once-living) organisms, for example a plant or plants. A bio-based resin is not a synthetic resin i.e., it is not manufactured by chemical synthesis. Bio-based resins, such as polyfurfuryl alcohol resin and lignin biopolymer, provide environmentally friendly alternatives to synthetic phenolic resins. Furthermore, bio-based resins, such as polyfurfuryl alcohol resin and lignin biopolymer, are considerably less harmful than phenolic resin and are therefore safer to use.

In this specification, a hardener is a curing agent, i.e., a component which increases the resilience of a mixture once it sets. A curing agent effects a curing process to form a solid polymeric composite network.

All proportions in this specification are expressed as weight percentages (%(w/w)).

### Thermal insulating structure (Example 1)

A thermal insulating structure was made up of a tie coat, a foam insulating layer and an outer protective layer with the following constituents. First and second materials were formed, and mixed together in the following proportions.

### Tie coat

### First material (part A)

| **General term** | **Specific example** | **Quantity %(w/w)** |
|---|---|---|
| Bio-based resin | Polyfurfuryl alcohol (PFA) resin | 68.5 |
| Plasticiser | Ethanediol | 0.7 |
| Anti-cissing agent | Anti-cissing agent | 0.7 |
| Coupling agent | Amino functional silane coupling agent | 0.7 |
| Dispersion aid | Dispersion aid | 0.045 |
| Filler | Fumed silica | 3.1 |
| Reinforcing agent | Solid microspheres | 26 |

### Second material (part B)

| **General term** | **Specific example** | **Quantity %(w/w)** |
|---|---|---|
| Hardener | Partial phosphate ester | 94 |
| Cure accelerator | Para toluene sulphonic acid | 1 |
| | water | 5 |

In this example, the ratio of the first material to the second material (first material : second material) is 7:1. Accordingly, the formulation comprises 87.5% of the first material and 12.5 % of the second material.

### Foam insulating layer

### First material (part A)

| **General term** | **Specific example** | **Quantity %(w/w)** |
|---|---|---|
| Bio-based resin | PFA resin (polyfurfuryl alcohol) | 52.9 |
| Coupling agent | Amino functional silane coupling agent | 1.7 |
| Reinforcing agent | 6 mm glass strands | 1.7 |
| Closed voids reinforcing agent | Hollow glass microspheres | 26.5 |
| Toughener | Micronised nitrile butadiene rubber | 17.2 |

### Second material (part B)

| **General term** | **Specific example** | **Quantity %(w/w)** |
|---|---|---|
| Hardener | Partial phosphate ester | 100 |
| Cure accelerator | Para toluene sulphonic acid | n/a |

In some examples, up to 10 %(w/w) para toluene sulphonic acid may be included in part B.

In this example, the ratio of the first material to the second material (first material : second material) is 7:1. Accordingly, the formulation comprises 87.5% of the first material and 12.5 % of the second material.

### Outer protective layer

### First Material (part A)

| **General term** | **Specific example** | **Quantity %(w/w)** |
|---|---|---|
| Bio-based resin | Polyfurfuryl alcohol (PFA) resin | 97.1 |
| Coupling agent | Amino functional silane coupling agent | 0.5 |
| Plasticiser | Ethanediol | 0.8 |
| Filler | Fumed silica | 1.6 |

### Second material (part B)

| **General term** | **Specific example** | **Quantity %(w/w)** |
|---|---|---|
| Hardener | Partial phosphate ester | 100 |
| Cure accelerator | Para toluene sulphonic acid | n/a |

In some examples, up to 10 %(w/w) para toluene sulphonic acid may be included in part B.

In this example, the ratio of the first material to the second material (first material : second material) is 12.5:1. Accordingly, the formulation comprises 92.6% of the first material and 7.4 % of the second material.

### Thermal insulating structure (Example 2)

Another thermal insulating structure was made up of a tie coat, a foam insulating layer and an outer protective layer with the following constituents. First and second materials were formed, and mixed together in the following proportions.

### Tie coat

### First material (part A)

| **General term** | **Specific example** | **Quantity %(w/w)** |
|---|---|---|
| Bio-based resin | 50 % (w/w) Lignin solution in NaOH | 68.5 |
| Plasticiser | Ethanediol | 0.7 |
| Anti-cissing agent | Anti-cissing agent | 0.7 |
| Coupling agent | Amino functional silane coupling agent | 0.7 |
| Dispersion aid | Dispersion aid | 0.045 |
| Filler | Fumed silica | 3.1 |
| Reinforcing agent | Solid microspheres | 26 |

### Second material (part B)

| **General term** | **Specific example** | **Quantity %(w/w)** |
|---|---|---|
| Hardener | 1,2,3-Propantriol, homopolymer, 2-oxiranylmethyl ether | 100 |

In this example, the ratio of the first material to the second material (first material : second material) is 7:1. Accordingly, the formulation comprises 87.5% of the first material and 12.5% of the second material.

### Foam insulating layer

### First material (part A)

| **General term** | **Specific example** | **Quantity %(w/w)** |
|---|---|---|
| Bio-based resin | 50 % (w/w) Lignin solution in NaOH | 57. 9 |
| Coupling agent | Amino silane coupling agent | 1.5 |
| Reinforcing agent | 6 mm glass fibres | 1.5 |
| Closed voids reinforcing agent | Hollow glass microspheres | 23.6 |
| Toughener | Micronised nitrile butadiene rubber | 15.5 |

### Second material (part B)

| **General term** | **Specific example** | **Quantity %(w/w)** |
|---|---|---|
| Hardener | 1,2,3-Propantriol, homopolymer, 2-oxiranylmethyl ether | 100 |

In this example, the ratio of the first material to the second material (first material : second material) is 7:1. Accordingly, the formulation comprises 87.5% of the first material and 12.5 % of the second material.

### Outer protective layer

### First Material (part A)

| **General term** | **Specific example** | **Quantity %(w/w)** |
|---|---|---|
| Bio-based resin | 50 % (w/w) Lignin solution in NaOH | 97.1 |
| Coupling agent | Amino functional silane coupling agent | 0.5 |
| Plasticiser | Ethanediol | 0.8 |
| Filler | Fumed silica | 1.6 |

### Second material (part B)

| **General term** | **Specific example** | **Quantity %(w/w)** |
|---|---|---|
| Hardener | 1,2,3-Propantriol, homopolymer, 2-oxiranylmethyl ether | 100 |

In this example, the ratio of the first material to the second material (first material : second material) is 12.5:1. Accordingly, the formulation comprises 92.6% of the first material and 7.4 % of the second material.

In example 2 above, a 50 % (w/w) lignin solution in NaOH was used. In other example, up to an 80% (w/w) lignin solution in NaOH can be used.

In example 2 above, the hardener is an epoxy-based hardener, exemplified by 1,2,3-Propantriol, homopolymer, 2-oxiranylmethyl ether.

Accordingly, in some examples, the bio-based resin comprised in the foam insulating layer first material and/or the tie coat first material and/or the outer protective layer first material is a polyfurfuryl alcohol resin. In such examples, the hardener comprised in the foam insulating layer second material and/or the tie coat second material and/or the outer protective layer second material is a partial phosphate ester.

In other examples, the bio-based resin comprised in the foam insulating layer first material and/or the tie coat first material and/or the outer protective layer first material is a lignin biopolymer. In such examples, the hardener comprised in the foam insulating layer second material and/or the tie coat second material and/or the outer protective layer second material is an epoxy-based hardener.

A toughener, such as micronised nitrile rubber, acts as a toughener by preventing cracking and reducing internal stress, providing mechanical strength and resiliency to protect against impact.

Glass strands provide reinforcement. Chopped glass strands are typically from 3 to 12 mm long and optimally approximately 6 mm long.

Coupling agents, such as silane coupling agents, are chemicals which enhance adhesion or bonding between fiber surface and polymer matrix.

The hollow glass microspheres of the foam insulating layer are hollow glass expanded spheres, which in some examples have an SG of from 0.005 to 0.02, and optimally 0.01. The hollow glass microspheres have a collapse or burst pressure appropriate for subsea use. Accordingly, the hollow glass microspheres can withstand hydrostatic pressures (water depths of 3000m).

The solid microspheres in the tie coat may be glass.

Structures according to examples of the disclosure can resist both mechanical flexure and thermal expansion of the substrates. This feature is enhanced by the presence in all three layers of the silane coupling agent, and the dispersion aids which serve to enhance the strength of matrix reinforcement interface. This property can be enhanced by the presence of plasticisers (di ethyl ethyl phosphonate, ethane diol) and also the toughener which enhances the ductility of the thermal insulating layer.

Structures according to examples of the disclosure were subjected to simulated service testing and shown to have comparable performance to structures based on phenolic resins. Structures according to examples of the disclosure are therefore suitable, for example, for thermally insulating subsea oil and gas equipment, and particularly in deep water and ultra deep water developments.

Substrates, for example, items of subsea equipment which benefit from thermal insulation include, wellheads and Xmas trees, spool pieces, manifolds, risers and pipe field joints.

### Method

A thermal insulating structure, for instance in relation to examples 1 or 2 above, can be applied onto a substrate such as subsea equipment referred to above.

The first and second materials of the tie coat are mixed together and pasted onto the substrate using a brush or roller to provide a layer 0.15 to 1 mm thick, and optimally to a uniform film thickness of 150 to 300 microns checked using a wet film thickness gauge. This layer is left to green cure. The substrate will typically be of prepared steel. The surface of the substrate may be prepared by cleaning with a suitable solvent, such as methyl ethyl ketone (MEK), isopropanol alcohol IPA, industrial methylated spirits IMS, or acetone.

The tie coat is left to cure until the resin is no longer liquid and has become tacky. The ideal level of tack may be achieved in 15 to 60 minutes depending on the environmental conditions. Low temperatures and high relative humidity will extend the time to tack. High temperatures and low relative humidity will reduce the time to tack.

When ready, the first and second materials of the foam insulating layer are mixed together. Mixing may be carried out in a planetary, or similar, dough mixer.

Air incorporated into the material during mixing is removed by consolidating the reaction mixture of the first and second materials into malleable tiles of a predetermined and controlled thickness in either a pneumatic press or vacuum table. These tiles are then applied on top of the green cured tie coat. Tiles may be made, for example, using a 10, 15, 20, 25 mm template and these can be built up to achieve the final design thickness. Layers of up to 30 mm thick, and multiple layers, can be applied as required.

Before application of the tiles, the degree of tack present in the tie coat is checked, as described above. Generally, tiles are applied while in workable condition (typically within one hour of pressing). Tiles are applied by careful layering onto the tie-coated surface such that the possibility of trapping air underneath is minimised. In some examples, consolidation is achieved by gentle rolling or tamping utilising a plastic float taking care not to squeeze the material out and thin the tile.

In some examples, to avoid butt joints between tiles, the tile edges are compressed to approximately 10 to 15 mm using the edge of trowel or float, creating a chamfer. Subsequent tiles may be laid as closely as possible to the previous one and overlapped onto the compressed edges of the adjacent tile to ensure a good bond is achieved, thus minimising any voids in the joints. The joint can then be rolled or smoothed by hand or float to ensure a uniform surface. If, after smoothing down, there are surface depressions at the joint, extra material may be overlaid to fill any grooves that remain and finally smoothed out by hand or float.

In some examples, joints between tiles in second and subsequent layers are staggered. The offset required to achieve a staggered tile lay-up may be minimum of 50 mm offset or 25 % of the length/width of the standard tile.

The foam insulating layer may be applied onto the tie coat in one of two ways: For regular shapes such as piping and large planar surfaces, the foam insulating layer can be applied as complete pieces in the form of pre-formed tiles. Specified thicknesses are built up by applying tiles layer upon layer as described below
For irregular shapes like tees, flanges, sections with change in cross-section etc., the foam insulating layer can be applied by cutting consolidated tiles into shapes as required.

Pre-moulded components can be provided in a range of shapes and sizes from relatively simple moulded panels, blocks or half-shell C-sections up to the most complex connector cover arrangements.

For application onto piping and regular shapes, the overall insulation thickness can be achieved with the right combination of layers with standard thickness of 10 mm, 15 mm, 20 mm and 25 mm. The first applied layer can be either 10 mm or 15 mm thickness and all subsequent tiles can be 15 / 20 / 25 mm thickness. Generally, the required insulation thickness is built up using the minimum number of layers possible
After approximately 48 hours the outer protective layer is then optionally formed on top of the foam insulating layer. The first and second materials of the outer protective layer are mixed together, for example by hand, and then laid onto appropriate fibre reinforcement which may be in the form of tape or cloth in sheet or roll form, and could be of glass, Kevlar, carbon or other materials. None limiting examples of fibre reinforcement include biaxial/chopped strand mat (CSM), combination glass cloth (600gsm biaxial and 225 gsm CSM), or biaxial glass cloth only (450 gsm).

The outer protective layer is typically be 3 to 5 mm thick. The outer protective layer may be a reinforced outer skin.

In some examples, optimally environmental conditions in the application areas are maintained at a temperature of from 15 to 40 °C, a relative humidity of less than 90 % and a dew point equal to or greater than 3 °C.

Accordingly, examples of the disclosure provide a method of applying a thermal insulating structure as described above to a substrate. The method comprises applying the tie coat to the substrate. The method further comprises applying the foam insulating layer to the tie coat. Optionally, the method comprises applying an outer protective layer to the foam insulating layer.

Examples of the disclosure also provide a substrate having a thermal insulating structure thereon as described above, in which the tie coat is bonded to the substrate and the foam insulating layer is bonded to the tie coat. Optionally, an outer protective layer is bonded to the foam insulating layer.

Structures according to examples of the disclosure are capable of being easily formed into complex shapes to accommodate, for example, the components of a pipe-line assembly.

Thermal insulation structures according to examples of the disclosure provide passive insulation useable for installations in a subsea environment. The thermal insulation structures are substantially impermeable to the ingress of sea water, resistant both to the range of absolute temperatures experienced subsea and the temperature differential across the insulation, while being sufficiently resilient to resist the flexural and impact stresses pertinent to installation, transport and service.

In some examples, the foam insulation layer is a syntactic foam. Syntactic foams are created by filling a resinous matrix with a particle that itself contains a closed void, such as a hollow microsphere, such that the apparent specific gravity of the particulate material is significantly below the true specific gravity of the solid material from which the sphere is made. This property is then imparted to the resinous matrix in proportion to the volume occupied by the hollow particulate spheres. Spherical particles have a reinforcing effect, using the same mechanism as fibrous reinforcements. However spherical reinforcements provide isotropic properties, whereas fibrous or lamina reinforcements provide directional properties. Structures based on low density syntactic materials provide high thermal efficiency whilst minimising the overall weight applied to structures.

There is thus described a thermal insulating structure, a method of applying such a structure to a substrate, and a thermally insulated substrate which provide a number of advantages as described above.

Furthermore, the structures can be formed by cold curing (i.e., without the addition of heat, e.g., from 5 to 40°C), making them ideal for direct application at any stage of manufacture of equipment and pipework. The structures can be applied to finished and assembled structures on site in ambient conditions. Accordingly, structures offer a pack-in-place solution suited to complex geometries and accommodating of late design changes with no impact on schedule. The material does not experience shrinkage during curing, thereby enabling accurate thickness control during application. The application process ensures joins will become homogenous, thereby avoiding weak points in the structure, i.e., system. The application process is relatively simple making modification and adjustment to insulation thickness coverage quick and simple.

The structures are capable of being easily formed into complex shapes, for instance, to accommodate the components of a pipe-line assembly. Structures according to examples of the disclosure are arranged as a pack in place system, which makes negotiating difficult geometries easier and more cost effective.

The structures may be applied to a variety of highly complex, dynamic oilfield production equipment located at depths of up to 3000 m, including applications such as Christmas trees, tie-in spools, manifolds and pipeline end terminations that are often subject to temperatures of 180 °C. Accordingly, structures have high temperature performance, for instance suitable for operating temperatures of up to 185 °C. Structures are resistant to high pressure, i.e., hydrostatic pressures (water depths of 3000 m). Accordingly, structures are resilient and capable of tolerating the high temperature and pressure extremes, for example, in harsh subsea environments involved in offshore oil and gas production. Structures are also able to resist or stop water passing therethrough, which in some examples is aided by the presence of an outer protective layer. In such examples, the outer protective layer can also improve the mechanical strength of the structure.

The benefits of thermal insulation are firstly a higher production rate by maintaining high oil temperature and increasing flow rates. Secondly lower processing costs by elimination of the requirement to reheat crude oil for water separation upon its arrival at the platform. Thirdly the prevention of hydrate and wax formation by maintaining the oil temperature above that at which hydrates form, in turn eliminating pipe blockages which would increase production costs. Fourthly, the elimination of the need for methanol injection to overcome the problems described above. Fifthly a reduction in the requirement for internal cleaning of pipes (known as pipe pigging).

Examples of the disclosure relate to the manufacture of wet pastes of bio-based resins, which in some examples are expanded with hollow spheres. The subsequent curing of those pastes is normally without the application of external heat, i.e., cold cure.

Various other modifications may be made without departing from the scope of the invention. For instance, different materials or different proportions of materials may be used. The viscosity of mixtures may be adjusted by the addition of volatile solvents and/or neutral phosphate plasticisers, such that the wet mixtures can be applied with conventional spray equipment, or can be pumped into moulds and will flow as a casting material.

Whilst endeavouring in the foregoing specification to draw attention to those features of the invention believed to be of particular importance it should be understood that the Applicant claims protection in respect of any patentable feature or combination of features hereinbefore referred to whether or not particular emphasis has been placed thereon.

## Claims

1. A thermal insulating structure for a substrate, the thermal insulating structure comprising:
a tie coat bonded to the substrate; and
a foam insulating layer bonded to the tie coat, wherein the foam insulating layer is the reaction product of a first material comprising a bio-based resin and a second material comprising a hardener.

2. A thermal insulating structure according to claim 1, wherein the foam insulating layer first material comprises from 35 to 80 %(w/w) of the bio-based resin.

3. A thermal insulating structure according to claim 1 or 2, wherein the foam insulating layer second material comprises 100 %(w/w) of the hardener.

4. A thermal insulating structure according to any of the preceding claims, wherein the foam insulating layer first material comprises up to 2.5 %(w/w) of an amino functional silane coupling agent.

5. A thermal insulating structure according to any of the preceding claims, wherein the foam insulating layer first material comprises up to 5 %(w/w) glass strands.

6. A thermal insulating structure according to any of the preceding claims, wherein the foam insulating layer first material comprises from 15 to 30 %(w/w) hollow microspheres.

7. A thermal insulating structure according to any of the preceding claims, wherein the foam insulating layer first material comprises up to 20 %(w/w) of a toughener.

8. A thermal insulating structure according to any of the preceding claims, wherein the tie coat is the reaction product of a first material comprising a bio-based resin and a second material comprising a hardener.

9. A thermal insulating structure according to any of the preceding claims, wherein the thermal insulating structure comprises an outer protective layer bonded to the foam insulating layer.

10. A thermal insulating structure according to claim 9, wherein the outer protective layer is the reaction product of a first material comprising a bio-based resin and a second material comprising a hardener.

11. A thermal insulating structure according to any of the preceding claims, wherein the bio-based resin comprised in the foam insulating layer first material is a polyfurfuryl alcohol resin and the hardener comprised in the foam insulating layer second material is a partial phosphate ester, or wherein the bio-based resin comprised in the foam insulating layer first material is a lignin biopolymer resin and the hardener comprised in the foam insulating layer second material is an epoxy-based hardener..

12. A thermal insulating structure according to claim 8, wherein the bio-based resin comprised in the tie coat first material is a polyfurfuryl alcohol resin and the hardener comprised in the tie coat second material is a partial phosphate ester, or wherein the bio-based resin comprised in the tie coat first material is a lignin biopolymer resin and the hardener comprised in the tie coat second material is an epoxy-based hardener.

13. A thermal insulating structure according to claim 10, wherein the bio-based resin comprised in the outer protective layer first material is a polyfurfuryl alcohol resin and the hardener comprised in the outer protective layer second material is a partial phosphate ester, or wherein the bio-based resin comprised in the outer protective layer first material is a lignin biopolymer resin and the hardener comprised in the outer protective layer second material is an epoxy-based hardener.

14. A method of applying a thermal insulating structure to a substrate, the method comprising:
applying a tie coat to the substrate; and
applying a foam insulating layer to the tie coat, wherein the foam insulating layer is the reaction product of a first material comprising a bio-based resin and a second material comprising a hardener.

15. A substrate having a thermal insulating structure thereon, wherein the thermal insulating structure comprises:
a tie coat bonded to the substrate; and
a foam insulating layer bonded to the tie coat, wherein the foam insulating layer is the reaction product of a first material comprising a bio-based resin and a second material comprising a hardener.
